# EUROPEAN PATENT SPECIFICATION

(11) **EP 1 420 606 B1**
(45) Date of publication and mention of the grant of the patent: **05.03.2008**
(21) Application number: 03102685.9
(22) Date of filing: 02.09.2003
(51) Int. Cl.: H04Q 7/38, H04Q 7/28

(54) **System and method for identifying a user in a TETRA network**
System und Verfahren zur Identifizierung von einem Benutzer in einem TETRA Netz
Système et méthode pour l'identification d'un utilisateur dans un réseau TETRA

(30) Priority: 30.09.2002 GB 0222613
(43) Date of publication of application: 19.05.2004
(73) Proprietor: MOTOROLA, INC., Schaumburg, IL 60196 (US)
(72) Inventor: BLANCHETTE, Jeffrey c/o Motorola Limited, Basingstoke, Hampshire RG22 4PD (GB); Emberson, Grant, Basingstoke, Hampshire RG22 5UG (GB); Jakobson, Ken, 3500 Vaelose (DK); JOHUR, Jason, Maidenhead, Berkshire SL6 6DW (GB); YOUNG, Malcolm, Southsea, Hampshire PO4 9HQ (GB)
(74) Representative: McCormack, Derek James

(56) References cited:
- WO-A-00/59252
- US-A- 6 148 192
- US-A1- 2002 006 792
- US-A1- 2002 035 699
- "Digital cellular telecommunications system (Phase 2+) (GSM); Universal Mobile Telecommunications System (UMTS); Numbering, Addressing and Identification (3GPP TS 23.003 version 5.2.0 Release 5); ETSI TS 123 003" December 2001 (2001-12), ETSI STANDARDS, EUROPEAN TELECOMMUNICATIONS STANDARDS INSTITUTE, SOPHIA-ANTIPO, FR , XP014007382 ISSN: 0000-0001 * paragraph [002.] - paragraph [02.2] * * paragraph [00C3] *

## Description

### FIELD OF THE INVENTION

The present invention relates to mobile communications methods, systems, processors and terminals.

### BACKGROUND OF THE INVENTION

Mobile radio communications systems, for example cellular telephony or mobile radio communications systems, typically provide for radio telecommunication links to be arranged between a plurality of subscriber terminals, often referred to in the art as mobile stations (MSs). The term 'mobile station (MS)' generally includes both hand-portable and vehicular mounted radio units, radiotelephones and like radio communications units.

Mobile radio communications systems are distinguished from fixed communications systems, such as the public switched telephone networks (PSTN), principally in that mobile stations can move in geographical location to accompany their user and in doing so encounter varying radio propagation environments.

Mobile radio communications systems and mobile stations used in them may operate in one of two main modes, namely a TMO (trunked mode of operation) and a DMO (direct mode of operation). TMO communications use the fixed infrastructure supplied by the system operator, e.g. base transceiver stations (BTSs), to deliver communications from one terminal, e.g. the MS of one user or operator, to that of one or more others terminals, e.g. the MS of one or more other users. In contrast, DMO is a method that provides the capability of direct communication between two or more MSs without any associated operator's system infrastructure. Some MSs may be dual mode operating using either TMO or DMO as appropriate.

In a TMO radio communications system, each BTS has associated with it a particular geographical coverage area (or cell). The cell defines a particular range over which the BTS can maintain acceptable communications with MSs operating within the cell. Often cells are combined to produce an expanded system coverage area. Furthermore, cells are often grouped into location areas for the purposes of tracking a MS within the coverage area whilst minimising location-updating signalling.

In defining communications systems, an open systems interface (OSI) protocol has been defined by the International Standards Organisation (ISO) which defines a heirarchy of seven operational layers. Layer 1 represents physical connections between devices. Layer 2 represents datalinks between terminals. Layer 3 represents a network layout.

In the field of this invention, mobile communications systems are known which operate according to standard industry protocols in which Layers 1, 2 and 3 defined above are relevant. For example, systems operating according to the TETRA (TErrestrial Trunked Radio) standards are known. The TETRA standards are operating protocols which have been defined by the European Telecommunications Standards Institute (ETSI). The present invention is useful in (but not exclusively in) TETRA systems.

Currently available TETRA systems operating in either TMO or DMO to send a communication from a transmitting MS to one or more receiving MSs use a protocol in which codes giving the identities of the transmitting and receiving MSs are included in the Layer 2 signalling. This code is known as the ID address of the MS, also known as the ISSI (individual short subscriber identity) or, in its full TETRA form, the ITSI (individual TETRA subscriber identity). However, there is a current requirement to communicate in a TETRA system by targeting a MS user rather than the MS equipment. In this situation, the MS user need not be bound to any particular MS, and can use any MS available, e.g. in a pool, by logging onto and communicating using such an available MS. A known method which has been proposed to satisfy this requirement involves each MS user having an identity number to define the user uniquely. The number is referred to as a RUN (registered user number). The RUN may include one or more portions which define the user's organisation and/or organisational unit, e.g. police and particular police force. A user wishing to send a communication to a target user may indicate the target user by entering the target user's RUN. This may for example be found from a directory of RUNs corresponding to user names. A signal including the target user's RUN is sent in a TETRA system to the system SwMI (Switching and Manangement Infrastructure). The SwMI then translates the target user's RUN into the ID address of the MS that the target user is currently logged onto, so that the SwMI can signal the appropriate MS with the incoming communication.

The need for the SwMI to perform this translation in order to send on the communications to the appropriate MSs has certain serious drawbacks. For example, it introduces compatibility problems for MSs operating according to TETRA standards, e.g. it is necessary to send two different messages, e.g. one to send user communicated information and another in a supplemental message service which might not be implemented in all MSs to send user ID information. Furthermore, the need for translations by the SwMI relies on distributed databases which associate a terminal with a user. Since there is always a finite delay in updating such databases when the user of a given terminal changes, there is a possible risk of messages being directed by the SwMI to the wrong terminal.

In any case, in certain use situations translation by the SwMI is not possible. For example, when the BTS is operating in the condition known as BTS 'fallback', the SwMI is not fully operational. Also, in DMO, there is no SwMI at all. In such conditions, the user of the transmitting MS has to identify the target for communications such as calls and short data messages with the receiving MS's ID address rather than the target user's RUN. This introduces further complexity.

Systems and methods are known in the prior art in which a user ID is used in conjunction with a terminal ID. US6148192 describes a method to check a subscriber identity on a SIM (subscriber identity module) against an equipment identity of a mobile equipment. The subscriber ID is stored in the mobile equipment if checking in the network of access rights of the subscriber ID in conjunction with the equipment is successful, this occurring during registration of the equipment with the network. The mobile equipment stores the subscriber ID of its own accord.

WO 00/59252 describes a means of providing IP connectivity between a mobile station (e.g. radio) and an external data communications network, where the IP address of the mobile station is specifically derived from the user identity, equipment identity and a network gateway exchange.

### SUMMARY OF THE PRESENT INVENTION

According to the present invention in a first aspect, there is provided a method of operation in a mobile communications system including a plurality of user terminals and a fixed system infrastructure wherein an ID (identity) code indicating a current user of a user terminal is stored by and used in signalling by and/or to the user terminal, wherein the method includes the steps of:
(i) a user terminal sending to a fixed processor of the system infrastructure a signal including a user ID code identifying the current user of the user terminal;
(ii) the fixed processor validating the user ID code;
(iii) the fixed processor producing and sending to the user terminal an instruction signal instructing the user terminal to begin an ID address set-up procedure;
(iv) the user terminal in response to receiving the instruction signal beginning an ID address set-up procedure to form a current working ID address including the user ID code;
(v) the user terminal storing the formed current working ID address for use as its working ID address in communications by the user terminal.

The system includes a plurality of user terminals and an ID (identity) code indicating a user of each of the user terminals may be stored by and used in signalling by and/or to the user terminal as or as part of an ID address code of the user terminal.

The method may include:
(i) a user terminal sending to a fixed processor of the system infrastructure a signal including a user ID code identifying the current user of the user terminal;
(ii) the processor producing and sending to the user terminal a signal instructing the user terminal to begin a re-registration procedure to begin the ID address set-up procedure;
(iii) the user terminal following acceptance of a re-registration request storing the user ID code for use in a working ID address in communications by the user terminal. A 'fixed' processor herein means one which does not move its position.

The ID address set-up procedure may thus include a forced registration procedure in which the user terminal sends a signal comprising a registration request to the fixed processor. The forced registration procedure may also include the fixed processor sending to the user terminal a signal indicating acceptance of the registration request and an instruction to use the (previously provided) user ID code as a Layer 2 address. The user terminal may be operable to store the user ID code as or included in a working ID address when it has received such a signal. The user ID code may be stored as a Layer 2 address to identify the user terminal when used in communications by the terminal when used by the current user.

The user terminals may comprise one or more mobile stations although one or more of the user terminals may comprise fixed terminals, e.g. control consoles, of a mobile communications system. Such fixed terminal(s) may be coupled to the system infrastructure by wireless connection or by wired connections, e.g. where the terminal is a so called line station. Communications between the various terminals in the mobile communications system may include wireless, e.g. radio, communications.

The method according to the first aspect of the invention may include the initial step of the current user of the user terminal entering into the terminal a user ID code, which identifies the current user of the terminal. A user logon procedure may follow the entry of the user of the user ID code. This may include sending of a message to the fixed processor including the user ID code. The procedure may also require the user to provide a PIN (personal identification number) known only to the user (as distinct from the user ID code which my be known to all users of the system).

The fixed processor may in response produce a reply signal for sending to the user terminal which indicates acceptance of the user ID code and optionally the PIN number for use with the identified user terminal. The processor may also send in response the signal referred to earlier which instructs the user terminal to begin the ID address set-up procedure.

The entered user ID code may be the user's RUN as defined earlier. The system may be one operating according to TETRA standard procedures. In this case, the user terminal, when receiving the instructing signal from the fixed processor, may initiate the TETRA defined 'ITSI Attach' (a TETRA defined registration procedure) resulting in the fixed processor instructing the user terminal to use the user ID code in a terminal working ID address. Preferably, the user ID code has not more than seven digits to allow its accommodation in standard TETRA message format.

The fixed processor when sending the reply signal to the user terminal indicating acceptance of the forced registration request may indicate the user ID code to be used as a Layer 2 terminal ID address in the ASSI (alias short subscriber identity) field available in TETRA signalling. When the user terminal has received the user ID code in this way, it may be operable to store it for use as its working Layer 2 ID address.

The user terminal may conveniently include a processor which initiates sending of signals to the fixed processor, e.g. one or more suitably programmed digital signal processors. Similarly, the fixed processor may conveniently be one or more suitably programmed digital signal processor of the fixed infrastructure of the system. The fixed processor may be included in a zone controller of a TETRA infrastructure.

The signal including the user ID code to be sent by the user terminal to the fixed terminal may be generated automatically by the user terminal, e.g. under control of a processor of the terminal, when entry of the user ID code has been detected by the terminal. The signals to be sent by the fixed processor may be generated automatically by that processor when receipt of the user identity code has been detected and authenticated, e.g. in suitable dedicated fields of the Layer 3 signalling structure.

The method according to the present invention may further include a procedure to withdraw the working ID address from the user terminal when use of the terminal by the current user ends. This may involve a logoff procedure by the user which results in the user terminal sending a logoff signal to the fixed processor and the fixed processor returning an instruction signal causing the user terminal to stop using the Working ID address. When the terminal receives such an instruction signal, it may erase the working ID address from the user ID addresses it stores in its memory. It may then revert to using its permanent layer 2 ID address (e.g. ITSI in a TETRA terminal).

In practice, the user terminal may include a R.F. transmitter for sending outgoing signals generated by the processor of the terminal and a R.F. receiver for receiving incoming signals for analysing by the processor. The transmitter and the receiver functions may be combined to provide a single transceiver. Similarly, the system infrastructure may include a R.F. transmitter for sending in R.F. form outgoing signals generated by the infrastructure processor and a R.F. receiver for receiving incoming signals in R.F. form for analysing by the processor. The transmitter and the receiver may be combined to provide an infrastructure transceiver. The transceiver may be part of a base transceiver station (BTS), e.g. one of a plurality of base transceivers included in a BTS.

According to the present invention in a second aspect there is provided a system operable to carry out the method according to the first aspect including a plurality of user terminals and an infrastructure including the said processor.

According to the present invention in a third aspect there is provided a system infrastucture installation including a fixed processor operable to carry out the functions of the said fixed processor of the infrastructure. The installation may include a first register operably coupled to the fixed processor to record information about user terminals within the system and a second register operably coupled to the fixed processor to record information about users of terminals within the system. In practice, the first and second registers may be contained in a single memory function.

According to the present invention in a fourth aspect there is provided a user terminal, e.g. a mobile station, which is operable to carry out the method according to the first aspect and which is operable to store and use in communications the given ID address corresponding to the user ID code, e.g. as sent thereto by the fixed processor of the system infrastructure.

The system, method and component hardware units used therein may be operable according to TETRA standard operating protocols. In this case, the working ID address may be sent by the infrastructure to the user terminal in the field of an ASSI (alias short subscriber identity) which, as mentioned earlier, is an available field defined in the TETRA standard protocol. The user of such a terminal is not normally aware of the sending of a code in this field since it is used in Layer 2 signalling. The information sent between the user terminal and the fixed processor of the infrastructure to establish the given ID address may be by SDS (short data service) data transfer carried out generally in a conventional manner. SDS in TETRA) is used to send the RUN (which will become the working ID address ASSI) to the SwMI, and the SwMI acknowledges via SDS response. In practice, in a system including a MS operating in accordance with TETRA standards, the MS permanent ID address code (ITSI) may initially be offered by the user terminal using an existing method of so called 'ITSI Attach'. Later, the SwMI when returning an 'accept' message relating to the current user's RUN to the MS following logon by the user, may force the MS to perform a further ITSI Attach procedure using the RUN which has been provided resulting in a Layer 3 accept message from the SwMI including in the ASSI field a code to be stored by the MS for use as its Layer 2 ID working address.

The invention beneficially solves the problems associated with the prior art as described earlier. Thus, the need for the SwMI to perform a translation of the ID (RUN) of the target user into the ID of the MS currently associated with that user, and to direct communications to that MS are avoided. This allows simpler mobility management architecture to be used. The risk, introduced by the translation, of the SwMI sending a call set-up message to the wrong user terminal, is beneficially reduced. Furthermore, the working ID address provided to each MS can be used in a BTS fallback mode or in DMO as well as in a fully operational TMO.

The reason this procedure works in BTS fallback mode is that the MS knows its given ID address, e.g. ASSI, so the BTS, which in the fallback mode is cut off from the main operational intelligence of the infrastructure, where any translation would be undertaken, can just send this ID address, e.g. ASSI, on to any target user terminal required to be contacted, and the target user terminal can then can decode and use that address as identifying the sending terminal and user.

In DMO the user terminal, e.g. MS, keeps the given ID address, e.g. ASSI, in its memory on transition from TMO to DMO as distinct from the prior art in which any TMO assigned identity is discarded when a terminal switches from TMO to DMO. In the present invention, the user terminal is programmed to use the stored given ID address, e.g. provided in the ASSI field, provided in TMO as its ID address, e.g. as a "pseudo SSI" or working ID address when in a TETRA system. In this way, the same ID address can be used for communications in both TMO and DMO modes.

Embodiments of the present invention will now be described by way of example with reference to the accompanying drawings, in which:

### BRIEF DESCRIPTION OF THE ACCOMPANYING DRAWINGS

FIG. 1 is a block schematic diagram of a mobile communication system.
FIG. 2 is a chart showing steps involved in establishment and use of a working ID address of a mobile station as used in the system illustrated in FIG. 1.
FIG. 3 is a block schematic diagram of a mobile station used in the system shown in FIG. 1

### DESCRIPTION OF EMBODIMENTS OF THE INVENTION

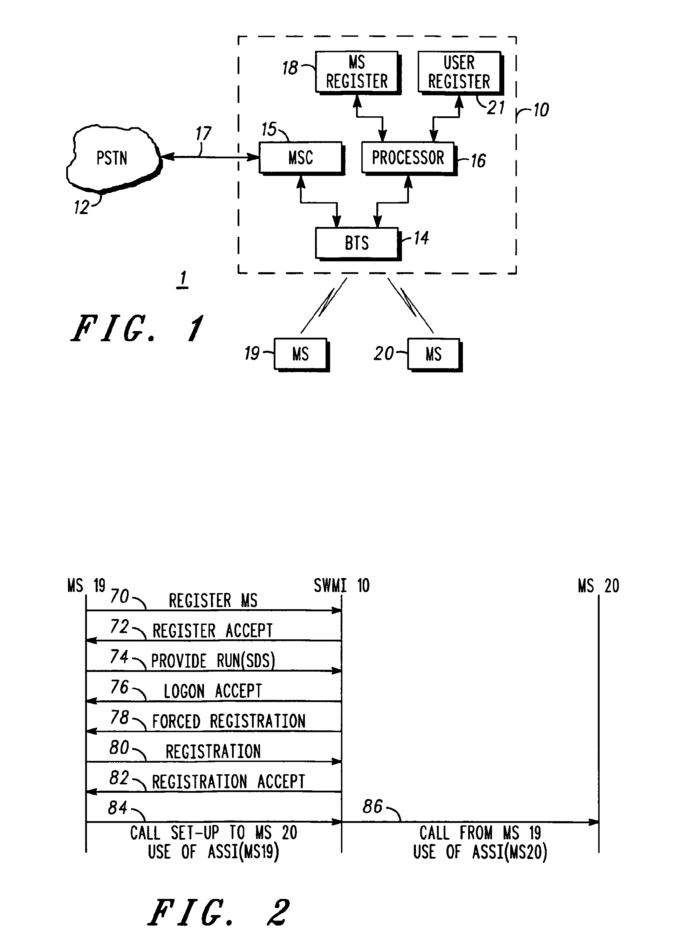

Referring to FIG. 1, there is shown schematically a mobile radio communication system 1 operating in accordance with TETRA standard protocols. The system 1 comprises a SwMI 10 and a plurality of MSs, two of which, MSs 19 and 20, are shown. The MSs 19, 20 in the system 1 can communicate directly with the SwMI 10 and with each other via the SwMI 10 in a TMO. The MSs 19, 20 can also communicate directly with each other in a DMO. Communications in the TMO are sent to and received from the MSs 19,20 by a BTS 14 and the control of such communications is by a processor 16. The BTS 14 and the processor 16 are sub-systems within the SwMI 10. Communications from the MSs 19 or 20 can also be sent via the BTS 14 to a MSC (master switch controller) 15 also incorporated in the SwMI 10. The MSC 15 is linked by a direct link (call control connection) 17 to a PSTN (public service telephone network) 12.
The BTS 14 routes calls to the processor 16 or to the MSC 15 depending on whether the call is directed to another MS in the system 1 or to a target terminal (not shown) to be reached via the PSTN 12. The SwMI 10 incorporates a MS register 18 and a user register 21. Both are operably coupled to the processor 16. The registers 18, 21 maintain respectively records of information about the MSs in the system 1 and about the users of the MSs. In particular, the register 18 maintains a record of the identity of the MSs. The identity is determined for example by the MS fixed ID address number which can initially be used to contact each MS by the SwMI. For a TETRA terminal, this is the so called ITSI (individual TETRA subscriber identity). The registers 18, 19 may be associated with a visited location register forming part of the processor 16 which gathers information relating to the location of the current cell or system which can serve the MS in question. Thus, in the embodiment shown in Figure 1, the visited location register is aware that the MS 20 is currently being served by the SwMI 10. The location information may be provided to the visited location register of the processor 16 in a known manner.
The register 21 maintains a record of the identity of the users of MSs in the system. Each identity is designated for example by the RUN.
A method of operation of the system 1 of FIG 1 is illustrated in FIG 2. When a MS, such as the MS 19, first powers on, a step 70 is performed. Layer 3 control signalling is sent by the MS 19 to the SwMI 10 via the BTS 14 to register with the system. The location of the MS is also registered with (the visited location register of) the SwMI 10 in a known manner. In a step 72, an acknowledgement or register accept signal is returned by the SwMI 10 to the MS 19. When a user of the MS 19 provides a logon entry by input of a RUN (registered user number) to the MS 19, as well as a PIN number specific to the MS 19 authorising use of the MS 19, a step 74 takes place. In this step, the MS 19 sends to the processor 16 of the SwMI 10 via the BTS 14 a radio signal by SDS (Layer 3 signalling) indicating that the MS 19 is currently to be used by the user identified by the particular RUN. The processor 16 checks and validates the logon by the current user by reference to the user register 19. After accepting the logon, the processor 16 sends in a step 76 a message, which is delivered by SDS to the MS 19, accepting the user logon. This acceptance is recognised by the MS 19 which provides (in a step not shown) an acknowledgement indication to the user that the RUN has been accepted.

In addition, the processor 16 causes the MS ID address number (ITSI) of the MS 19 to be recorded (in a memory associated with the processor 16 - not shown) as linked with the received RUN. Furthermore, in a step 78, the processor 16 generates and sends via the BTS 14 an instruction signal to the MS 19 to force the MS 19 to perform a further 'ITSI Attach' registration procedure. The MS 19 recognises the instruction and responds to this procedure by initiating such a procedure. This further procedure is similar to that which took place when the MS 19 first powered on. A registration request is sent by the MS 19 in a step 80. However, in this case, the accepted RUN is retrieved and offered by the processor 16 for use as an ASSI field of the working ID address by the MS 19. The processor 16 returns in a step 82 a signal to the MS 19 in which the RUN is identified in the signalling ASSI field for use as a Layer 2 ID address. The MS 19 is instructed in step 82 to use the code of the ASSI field in its Layer 2 working ID address. The MS 19 responds to this procedure by storing this working ID address as a layer 2 ID address in a memory of the MS 19. The MS 19 thereby is aware that it is to use the stored RUN in its working ID address in subsequent communications initiated by the MS 19, e.g. with other terminals, including stations within the system fixed and mobile in position.

When the MS 19 is to send a communication to another terminal, e.g. the MS 20 via the BTS 14 in TMO, the MS 19 establishes call set-up signalling in a conventional manner. Such signalling is sent in step 84 to the SwMI 10 and includes in a layer 2 message a field identifying an ID address of the sending MS 19 and in its layer 3 signals the ID address of the target MS 20. However, the MS 19 uses as its Layer 2 ID address in the call set up signalling the working ID address which has been given to the MS 19 by the above forced ITSI Attach procedure. The call set up signal in its Layer 3 signals is directed to the RUN of the user of MS 20 which has already been registered and stored as working ID address of the MS 20 in the manner as used for the MS 19. Without the need for translation of the target RUN, the SwMI forwards the control set-up signalling by directing the signalling to MS 20 by use of a Layer 2 message indicating the target RUN as the target ID address and indicating in level 3 signals that the call set up request is from the MS 19. In FIG. 2 steps 84 and 86, 'ASSI' indicates the working ID address.

The MS 19 can continue to use the given working ID address in communications to be sent by the MS 19 via the SwMI 10 when the SwMI 10 is in a fallback mode and also to be sent in DMO, e.g. directly to the MS 20. The latter procedure is not possible in prior art systems and methods used therein, in which any address signal sent by a SwMI for use in TMO is not available for use in DMO. By the invention, the MS 19 may store a directory (i.e. list of names and numbers of other users. Since the code provided by the processor 16 in the ASSI field, i.e. the ASSI, is to be used in TMO, 'Site Trunking' when BTS fallback takes place, and DMO, this directory is valid at all times. The MS 19 can always retrieve the appropriate ASSI and the correct user name if these are included in the directory. The working ID address established in the above manner may be withdrawn from the MS 19 when use of the MS 19 by the current user ends. This may involve a logoff procedure by the user which results in the MS 19 sending a logoff signal to the processor 16 and the processor 17 accepting the logoff and returning an instruction signal causing the MS 19 to stop using the working ID address. When the MS 19 receives such an instruction signal, it erases the working ID address from the layer 2 ID addresses it stores in its memory. It may then revert to using its permanent layer 2 ID address (ISSI).

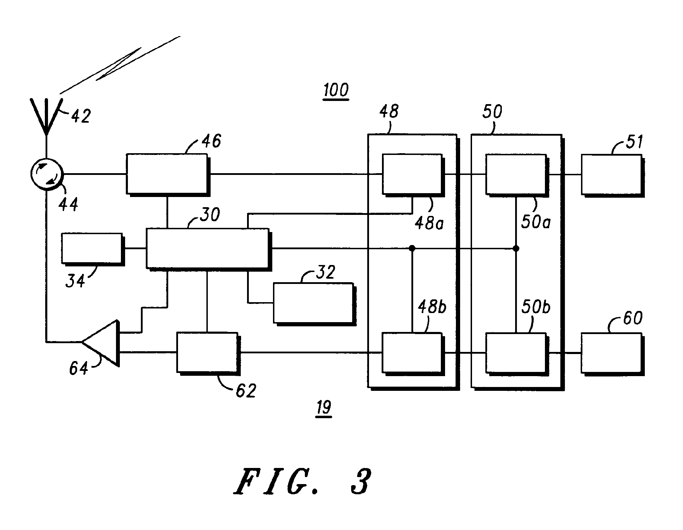

Referring now to FIG. 3, a block diagram of the MS 19 adapted to operate using an embodiment of the present invention is shown. The MS 19 may be suitable for operating in a TMO or DMO depending on the mode selected. Operation of functions within the MS 19 are controlled by a controller 30, which generally comprises a suitably programmed digital signal processor. The controller 30 may also controls the information flow and operational state of processors within the MS 19.

Information relevant to operation of the MS 19 is stored in a memory 34 associated with the controller 30. For example, layer 2 ID address information to be used in communications sent by the MS 19 is stored in the memory 34.

The MS 19 has a receiver chain and a transmitter chain and includes an antenna 42 coupled to a duplex filter or circulator 44 that provides isolation between receiver and transmitter chains within the MS 19. The receiver chain includes a receiver front-end circuit 46 (effectively providing reception, filtering and intermediate or base-band frequency conversion of incoming communications). The front-end circuit 46 receives radio communications from another terminal, such as another MS, e.g. the MS 20 (FIG. 1). The front-end circuit 46 is serially coupled to a signal processor (generally realised by a digital signal processor, DSP) 48a coupled to the controller 30. The signal processor 48a performs signal demodulation, error correction and formatting, and recovers end-to-end encrypted information from the received signal.

A signal representing the information recovered by the signal processor 48a is serially coupled to a baseband processing device 50a, which takes the information received from the processor 48a and formats it in a suitable manner to send to an output device 51, such as a speaker and/or display, e.g. a visual display unit (VDU) .

The functions of the controller 30, the signal processor 48a and the baseband processor 50a although shown as separate in FIG. 2 may be implemented within the same physical microprocessor device.

The transmitter chain of the MS 19 essentially includes an input device 60, such as a microphone, coupled in series through a baseband processor 50b, a signal processor 48b, transmitter/modulation circuitry 62 and a power amplifier 64. The processor 48b, transmitter/modulation circuitry 62 and the power amplifier 64 are operationally responsive to the controller 30. An output from the power amplifier 64 is supplied to the duplex filter or circulator 44, as known in the art. The transmit chain in the MS 19 takes the baseband signal from input device 60 and delivers it to the signal processor 48b where it is encoded for transmission by the transmit/modulation circuitry 62 and power amplifier 64.

The signal processor 48b in the transmit chain may be implemented in a device distinct from the processor 48a in the receiver chain. Alternatively, a single processor 48 may be used to implement processing of both transmit and receive signals, as shown in FIG. 3. Similarly, the baseband processor 50a and the baseband processor 50b may be separate devices or may be combined in a single device 50 as shown in FIG. 2.

Of course, the various components within the MS 19 can be realised in discrete or integrated component form, with an ultimate structure therefore being a suitable design selection from these forms.

In use of the MS 19, automatic generation of a signal to provide registration of the MS 19 in the manner of step 70 of FIG. 2 is initiated by the controller 30. A PIN (personal identification number) for authorised use of the MS 19 and a user ID number (RUN) are entered in the MS 19 via the interface 32 by its user. These inputs are recognised by the controller 30. A logon signal including the added user ID number and the MS identity is sent to the SwMI 10 (FIG. 1) in the manner described earlier (step 74 of FIG. 2). An acceptance signal accepting the added user ID is generated by the processor 16 of the SwMI 10 and sent to the MS 19 via the BTS 14. The acceptance signal is received by the circuit 46 and decoded by the processor 48 and recognised by the controller 30 and is indicated to the user on a display of the interface 32. The processor 16 also sends to the MS 19 control signalling which forces the MS 19 to undergo an 'ITSI Attach' ID address change procedure as referred to earlier. By this procedure, a signal binding the user ID code (RUN) to the MS 19 permanent ID (ITSI) is generated by the processor 16 of the SwMI 10 as in step 82 of FIG. 2. This signal includes a working ID address code corresponding to the user RUN sent by the MS 19 returned in the ASSI field according to TETRA protocols. This returned ASSI code is extracted by the receiver chain of the MS 19 and is passed to the controller 30 where it is recognised as a working ID address to be employed by the MS 19 when used by its current user. The working ID address is stored by the memory 34. It is used in the ID portion included in a known manner in control signals sent by the MS 19 to identify itself either in TMO to send communications to the BTS 14 or in DMO to send communications to the MS 20.

When the user of the MS 19 stops using the MS 19 a logoff procedure is initiated in which the controller 30 initiates sending a logoff signal to the processor 16. This results in a logoff acceptance being sent back to the MS 19 which is recognised by the controller 30. The controller 30 thereby erases the working ID address corresponding to the RUN of the user who has logged off from the memory 34.

If the MS 19 has a new user, the above logon and forced ITSI attach registration procedure is repeated. In this case, the user RUN changes. This causes a different working address to be authorised by the SwMI 10 as indicated in the ASSI field. In consequence, the different working ID address is stored by the memory 34 and used in communications by the MS 19.

## Claims

1. A method of operation in a mobile communications system including a plurality of user terminals (19, 20) and a fixed system infrastructure (10) wherein an identity code ID code, indicating a current user of a user terminal is stored by and used in signalling by and/or to the user terminal, wherein the method includes the steps of:
(i) a user terminal (19) sending (74) to a fixed processor (16) of the system infrastructure a signal including a user ID code (RUN) identifying the current user of the user terminal;
(ii) the fixed processor validating the user ID code;
(iii) the fixed processor producing and sending (78) to the user terminal an instruction signal instructing the user terminal to begin an ID address set-up procedure;
(iv) the user terminal in response to receiving the instruction signal beginning an ID address set-up procedure to form a current working ID address including the user ID code;
(v) the user terminal storing the formed current working ID address for use as its working ID address in communications by the user terminal.

2. A method according to claim 1 which includes prior to step (i) the current user of the user terminal entering into the terminal a user ID code, which identifies the current user of the terminal.

3. A method according to claim 1 or claim 2 wherein the user ID code has not more than seven digits.

4. A method according to any one of the preceding claims wherein a signal is sent by the user terminal in or prior to step (i) which comprises a system registration request which includes information identifying the user terminal and the fixed processor validates use of the terminal in the system by reference to a user terminal register.

5. A method according to any one of the preceding claims wherein the user ID code is known by other users of the system and wherein the user terminal sends to the fixed processor in addition to the user ID code a personal identification number (PIN) used by the current user and the fixed processor validates the use of the user terminal by the current user by reference to a memory storing valid user ID codes and a current PIN of each user.

6. A method according to any one of the preceding claims wherein, following validation by the fixed processor, the fixed processor sends to the user terminal an instruction signal instructing the user terminal to begin the ID address set-up procedure by re-registering in the system.

7. A method according to claim 6 wherein in response to receipt by the user terminal of the instruction signal, the user terminal sends (80) a signal comprising a re-registration request to the fixed processor.

8. A method according to claim 7 wherein the fixed processor in response to receipt of the re-registration request sends to the user terminal a response signal accepting (82) the request and indicating a current user ID address to be used by the user terminal, the current user ID address including the validated user ID code.

9. A method according to claim 8 and wherein in response to receipt of the response signal from the fixed processor, the user terminal stores the indicated working ID address including the user ID code and uses (84) the indicated working ID address in communications with other user terminal operating in the system.

10. A method according to any one of the preceding claims wherein the system includes a plurality of user terminals and wherein an ID code indicating a current user of each of the user terminals is included in an ID address indicated by the fixed processor and stored by and used in signalling by and/or to that user terminal.

11. A method according to any one of the preceding claims and wherein the system is one operating according to TETRA standard procedures and the current working ID address of the or each user terminal is a Layer 2 address.

12. A method according to claim 11 and wherein the user terminal in response to receiving the instruction signal from the fixed processor initiates an ITSI Attach procedure according to TETRA standard procedures.

13. A method according to claim 12 and wherein the fixed processor when sending a reply signal to the user terminal after receiving an ITSI Attach request signal from the user terminal indicates acceptance of the request signal and sends a response signal to the user terminal indicating that the user ID code defined in the alias short subscriber identity (ASSI) field available in Layer 3 TETRA signalling is to be used in the current working ID address by the user terminal.

14. A method according to any one of the preceding claims and which includes a procedure to withdraw the working ID address from the user terminal when use of the terminal by the current user ends.

15. A method according to claim 14 and wherein the procedure to withdraw the working ID address includes a logoff procedure initiated by the user which results in the user terminal sending a logoff signal to a fixed processor of the system infrastructure and the fixed processor returning a withdrawal instruction signal causing the user terminal to stop using the working ID address.

16. A method according to claim 15 and wherein when the user terminal receives the withdrawal instruction signal, it erases the working ID address from current user ID addresses that it stores in its memory.

17. A method according to any one of the preceding claims and wherein the system includes a plurality of user terminals comprising one or more mobile stations operable to provide wireless communications, each of the user terminals including a R.F. transmitter and a R.F. receiver, optionally combined as a transceiver, and wherein the system infrastructure includes at least one R.F. transmitter and at least one R.F. receiver, optionally combined as a transceiver, forming part of at least one BTS (base transceiver station) for sending communications in R.F. form between the system infrastructure and the user terminals.

18. A method according to any one of the preceding claims and wherein information sent between each user terminal and the fixed processor of the infrastructure to establish the given ID address is by SDS short data service (SDS) data transfer.

19. A method according to any one of the preceding claims and wherein when the working ID address of a user terminal currently being used by a target user is included in a communication initiation signal sent by another user terminal to the system infrastructure, the system infrastructure when receiving the communication initiation signal is operable to recognise the working ID address of the target user and to direct the required communication to the user terminal having that working ID address.

20. A method according to claim 19 and wherein the communications are sent whilst a base transceiver station of the system infrastructure through which communications are sent from one or more of the user terminals is in a fallback mode of operation.

21. A method according to any one of the preceding claims and wherein user terminals communicate with each other in a direct mode of operation, DMO, using the working ID addresses of the terminals established by the terminals in conjunction with the fixed processor.

22. A system infrastucture installation including a base transceiver station (14), a fixed processor (16) operably coupled to the base transceiver station (14) and memory associated with the fixed processor, the fixed processor being operable to:
(i) receive (74) via the base transceiver station from a user terminal (19) a signal including a user ID code identifying the current user of the user terminal;
(ii) validate (76) the user ID code;
(iii) produce and send (78) to the user terminal via the base transceiver station an instruction signal instructing the user terminal to begin an ID address set-up procedure;
(iv) record in the memory an ID address of the user terminal as linked with the validated user ID code;
(v) receive (80) from the user terminal via the base transceiver station in response to receiving the instruction signal from the fixed processor a registration request in which the user terminal has included the user ID code in a working address of the user terminal; and
(v) accept (82) registration of the user terminal in response to the registration request.

23. A system infrastructure installation according to claim 22 including a first register operably coupled to the fixed processor to record information about user terminals within the system and a second register operably coupled to the fixed processor to record information about users of terminals within the system.

24. A system infrastructure installation according to claim 23 and which when receiving a communication initiation signal from a user terminal is operable to recognise the working ID address of a target user terminal and to direct the required communication to the target user terminal having that working ID address.

25. A user terminal which is operable in a mobile communications system including a system infrastructure, the user terminal including a user interface (32), a R.F. transmitter (62, 64, 42), a R.F. receiver (42, 46) and a memory (34) and being operable to:
(i) receive via its user interface a current user ID code identifying a current user;
(ii) send via its transmitter a signal to a fixed processor (16) of the system infrastructure a signal including the current user ID code;
(iii) receive via its receiver from the fixed processor an instruction signal instructing the user terminal to begin an ID address set-up procedure;
(iv) in response to receiving the instruction signal begin an ID address set-up procedure to form a current working ID address including the current user ID code;
(v) store in the memory the formed current working ID address for use as its working ID address in communications by the user terminal.
(vi) send via the transmitter to the fixed processor a registration request in which the current user ID code is included in a working address of the user terminal.
(vii) use the formed working ID address in communications sent via the transceiver with other terminals of the system.

26. A user terminal according to claim 25 and which comprises a mobile station or a fixed terminal.

27. A user terminal according to claim 26 and wherein the user terminal comprises a fixed terminal which is connected by wired connection to the system infrastructure.

28. A user terminal according to claim 26 or claim 27 and which is operable to provide wireless communications by a trunked mode of operation, TMO, and by a direct mode of operation, DMO, and to use the same formed working ID address in both TMO and DMO.

## Patentansprüche

1. Verfahren zum Betrieb in einem Mobilkommunikationssystem mit einer Vielzahl von Teilnehmerendgeräten (19, 20) und einer festen Systeminfrastruktur (10), wobei ein Identitätscode, der einen aktuellen Benutzer eines Teilnehmerendgerätes angibt, vom Teilnehmerendgerät gespeichert und in der Nachrichtenübermittlung von dem und/oder an das Teilnehmerendgerät verwendet wird, wobei das Verfahren die folgenden Schritte aufweist:
(i) ein Teilnehmerendgerät (19) sendet (74) einem festen Prozessor (16) der Systeminfrastruktur ein Signal mit einem Teilnehmeridentitätscode (RUN), der den aktuellen Benutzer des Teilnehmerendgeräts identifiziert;
(ii) der feste Prozessor validiert den Teilnehmeridentitätscode;
(iii) der feste Prozessor erzeugt und sendet (78) dem Teilnehmerendgerät ein Anweisungssignal, das das Teilnehmerendgerät anweist, eine Identitätsadresseinrichtungsprozedur zu beginnen;
(iv) in Antwort auf den Empfang des Anweisungssignals beginnt das Teilnehmerendgerät eine Identitätsadresseinrichtungsprozedur, um eine aktuelle Arbeits-Identitätsadresse zu erzeugen, die den Teilnehmeridentitätscode enthält;
(v) das Teilnehmerendgerät speichert die erzeugte aktuelle Arbeits-Identitätsadresse, um jene als seine Arbeits-Identitätsadresse in Kommunikationsverbindungen des Teilnehmerendgeräts zu verwenden.

2. Verfahren nach Anspruch 1, wobei vor dem Schritt (i) der aktuelle Benutzer des Teilnehmerendgeräts einen den aktuellen Benutzer des Endgeräts identifizierenden Teilnehmeridentitätscode in das Endgerät eingibt.

3. Verfahren nach Anspruch 1 oder Anspruch 2, wobei der Teilnehmeridentitätscode nicht mehr als sieben Stellen hat.

4. Verfahren nach einem der vorhergehenden Ansprüche, wobei in oder vor dem Schritt (i) von dem Teilnehmerendgerät ein Signal ausgesendet wird, das eine Systemregistrierungsaufforderung umfasst, die Information enthält, die das Teilnehmerendgerät identifiziert, und wobei der feste Prozessor die Benutzung des Endgeräts in dem System durch Bezug auf ein Teilnehmerendgerätregister validiert.

5. Verfahren nach einem der vorhergehenden Ansprüche, wobei der Teilnehmeridentitätscode anderen Teilnehmern des Systems bekannt ist, und das Teilnehmerendgerät dem festen Prozessor zusätzlich zu dem Teilnehmeridentitätscode eine von dem aktuellen Benutzer verwendete persönliche Identitätsnummer (PIN) sendet, und wobei der feste Prozessor die Benutzung des Teilnehmerendgeräts durch den aktuellen Benutzer durch Bezug auf einen Speicher, der gültige Teilnehmeridentitätscodes sowie eine aktuelle PIN eines jeden Teilnehmers speichert, validiert.

6. Verfahren nach einem der vorhergehenden Ansprüche, wobei nach der Validierung durch den festen Prozessor der feste Prozessor dem Teilnehmerendgerät ein Anweisungssignal sendet, das das Teilnehmerendgerät anweist, die Identitätsadresseinrichtungsprozedur durch erneutes Registrieren in dem System zu beginnen.

7. Verfahren nach Anspruch 6, wobei in Antwort auf den Empfang des Anweisungssignals durch das Teilnehmerendgerät das Teilnehmerendgerät dem festen Prozessor ein eine Neuregistrierungsaufforderung enthaltendes Signal sendet (80).

8. Verfahren nach Anspruch 7, wobei der feste Prozessor in Antwort auf den Empfang der Neuregistrierungsaufforderung dem Teilnehmerendgerät ein Antwortsignal sendet, das die Aufforderung akzeptiert (82) und eine von dem Teilnehmerendgerät zu verwendende und den validierten Teilnehmeridentitätscode enthaltende aktuelle Teilnehmeridentitätsadresse angibt.

9. Verfahren nach Anspruch 8, wobei das Teilnehmerendgerät in Antwort auf den Empfang des von dem festen Prozessor ausgegangenen Antwortsignals die angegebene Arbeits-Identitätsadresse einschließlich dem Teilnehmeridentitätscode speichert und die angegebene Arbeits-Identitätsadresse in Kommunikationsverbindungen mit anderen in dem System operierenden Teilnehmerendgeräten verwendet (84).

10. Verfahren nach einem der vorhergehenden Ansprüche, wobei das System eine Vielzahl von Teilnehmerendgeräten aufweist und ein Identitätscode, der zu jedem der Teilnehmerendgeräte dessen aktuellen Benutzer angibt, in einer Identitätsadresse enthalten ist, die von dem festen Prozessor angegeben und von dem Teilnehmerendgerät gespeichert und in der Signalübermittlung von dem und/oder an das Teilnehmerendgerät verwendet wird.

11. Verfahren nach einem der vorhergehenden Ansprüche, wobei das System gemäß TETRA-Standardprozeduren arbeitet, und die aktuelle Arbeits-Identitätsadresse von dem oder jedem Teilnehmerendgerät eine Layer-2-Adresse ist.

12. Verfahren nach Anspruch 11, wobei das Teilnehmerendgerät in Antwort auf den Empfang des Anweisungssignals von dem festen Prozessor eine ITSI-Attach-Prozedur gemäß TETRA-Standardprozeduren initiiert.

13. Verfahren nach Anspruch 12, wobei der feste Prozessor, wenn er nach Empfangen eines von dem Teilnehmerendgerät ausgegangenen ITSI-Attach-Aufforderungssignals dem Teilnehmerendgerät ein Antwortsignal sendet, eine Akzeptierung des Aufforderungssignals angibt und dem Teilnehmerendgerät ein Antwortsignal sendet, das angibt, dass der Teilnehmeridentitätscode, der im Alias-Short-Subscriber-Identity (ASSI)-Feld definiert ist, das in einer Layer-3-TETRA-Signalübermittlung verfügbar ist, von dem Teilnehmerendgerät in der aktuellen Arbeits-Identitätsadresse verwendet werden soll.

14. Verfahren nach einem der vorhergehenden Ansprüche, mit einer Prozedur, mit der die Arbeits-Identitätsadresse von dem Teilnehmerendgerät entfernt wird, wenn die Benutzung des Teilnehmerendgeräts durch den aktuellen Benutzer endet.

15. Verfahren nach Anspruch 14, wobei die Prozedur zum Entfernen der aktuellen Identitätsadresse eine Abmeldeprozedur enthält, die vom Teilnehmer initiiert wird und zum Ergebnis hat, dass das Teilnehmerendgerät einem festen Prozessor der Systeminfrastruktur ein Abmeldesignal sendet und der feste Prozessor ein Entferne-Anweisungssignal zurückgibt, das das Teilnehmerendgerät veranlasst aufzuhören, die Arbeits-Identitätsadresse zu verwenden.

16. Verfahren nach Anspruch 15, wobei das Teilnehmerendgerät, wenn es das Entferne-Anweisungssignal empfängt, die Arbeits-Identitätsadresse aus aktuellen Teilnehmeridentitätsadressen, die es in seinem Speicher speichert, löscht.

17. Verfahren nach einem der vorhergehenden Ansprüche, wobei das System eine Vielzahl von Teilnehmerendgeräten aufweist, die eine oder mehrere zum Schaffen einer Funkkommunikations betreibbare Mobilstationen umfassen, wobei jedes der Teilnehmerendgeräte einen RF-Sender und einen RF-Empfänger aufweist, die optional als Transceiver kombiniert sind, und wobei die Systeminfrastruktur mindestens einen RF-Sender und mindestens einen RF-Empfänger enthält, die optional als Transceiver kombiniert sind und Teil mindestens einer Basistransceiverstation (BTS) zum Senden von Nachrichten in RF-Form zwischen der Systeminfrastruktur und den Teilnehmerendgeräten sind.

18. Verfahren nach einem der vorhergehenden Ansprüche, wobei Information, die zwischen jedem Teilnehmerendgerät und dem festen Prozessor der Infrastruktur zum Ermitteln der gegebenen Identitätsadresse gesendet wird, mittels Short-Data-Service (SDS)-Datentransfer gesendet wird.

19. Verfahren nach einem der vorhergehenden Ansprüche, wobei, wenn die Arbeits-Identitätsadresse eines aktuell von einem Zielteilnehmer verwendeten Teilnehmerendgerätes in einem von einem anderen Teilnehmerendgerät an die Systeminfrastruktur gesendeten Kommunikationsiinitiationssignal enthalten ist, die Systeminfrastruktur beim Empfang des Kommunikationsinitiationssignals so betreibbar ist, dass sie die Arbeits-Identitätsadresse des Zielteilnehmers erkennt und die erforderliche Nachricht an das Teilnehmerendgerät sendet, das jene Arbeits-Identitätsadresse hat.

20. Verfahren nach Anspruch 19, wobei die Nachrichten gesendet werden, während sich eine BTS der Systeminfrastruktur, über die Nachrichten von einem oder mehreren der Teilnehmerendgeräte gesendet werden, in einem Reserve-Betriebsmodus befindet.

21. Verfahren nach einem der vorhergehenden Ansprüche, wobei Teilnehmerendgeräte miteinander in einem direkten Betriebsmodus, DMO, kommunizieren und dabei die von den Endgeräten in Verbindung mit dem festen Prozessor eingerichteten Arbeits-Identitätsadressen verwenden.

22. Systeminfrastrukturinstallation mit einer BTS (14), einem festen Prozessor (16), der funktionell mit der BTS (14) verbunden ist, und einem dem festen Prozessor zugeordneten Speicher, wobei der feste Prozessor so betreibbar ist, dass er:
(i) von einem Teilnehmerendgerät (19) über die BTS ein Signal empfängt (74), das einen Teilnehmeridentitätscode enthält, der den aktuellen Benutzer des Teilnehmerendgeräts identifiziert;
(ii) den Teilnehmeridentitätscode validiert (76);
(iii) ein Anweisungssignal, das das Teilnehmerendgerät anweist, eine Identitätsadresseinrichtungsprozedur zu beginnen, erzeugt und über die BTS an das Teilnehmerendgerät sendet (78);
(iv) eine Identitätsadresse des Teilnehmerendgeräts als mit dem validierten Teilnehmeridentitätscode verbunden im Speicher ablegt;
(v) in Antwort auf den Empfang des von dem festen Prozessor ausgegangenen Anweisungssignals von dem Teilnehmerendgerät über die BTS eine Registrierungsaufforderung, in der das Teilnehmerendgerät den Teilnehmeridentitätscode in einer Arbeitsadresse des Teilnehmerendgeräts aufgenommen hat, empfängt (80); und
(vi) in Antwort auf die Registrierungsaufforderung eine Registrierung des Teilnehmerendgeräts akzeptiert (82).

23. Systeminfrastrukturinstallation nach Anspruch 22, mit einem ersten Register, das funktionell mit dem festen Prozessor verbunden ist, um Information über Teilnehmerendgeräte innerhalb des Systems zu registrieren, und einem zweiten Register, das funktionell mit dem festen Prozessor verbunden ist, um Information über Benutzer von Endgeräten innerhalb des Systems aufzunehmen.

24. Systeminfrastrukturinstallation nach Anspruch 23, die, wenn sie ein Kommunikationsinitiationssignal von einem Teilnehmerendgerät empfängt, so betreibbar ist, dass sie die Arbeits-Identitätsadresse eines Zielteilnehmerendgeräts erkennt und die erforderliche Nachricht an das Zielteilnehmerendgerät richtet, das jene Arbeits-Identitätsadresse hat.

25. Teilnehmerendgerät, das in einem mobilen Kommunikationssystem, das eine Systeminfrastruktur aufweist, betreibbar ist, wobei das Teilnehmerendgerät eine Teilnehmerschnittstelle (32), einen RF-Sender (62, 64, 42), einen RF-Empfänger (42, 46) und einen Speicher (34) aufweist und so betreibbar ist, dass es:
(i) über seine Teilnehmerschnittstelle einen aktuellen Teilnehmeridentitätscode empfängt, der einen aktuellen Benutzer identifiziert;
(ii) über seinen Sender einem festen Prozessor (16) der Systeminfrastruktur ein Signal sendet, das den aktuellen Teilnehmeridentitätscode enthält ;
(iii) von dem festen Prozessor über seinen Empfänger ein Anweisungssignal empfängt, das das Teilnehmerendgerät anweist, eine Identitätsadressen-Einrichtungsprozedur zu beginnen;
(iv) in Antwort auf den Empfang des Anweisungssignals eine Identitätsadressen-Einrichtungsprozedur beginnt, um eine aktuelle Arbeits-Identitätsadresse zu erzeugen, die den aktuellen Teilnehmeridentitätscode enhält.
(v) im Speicher die erzeugte aktuelle Arbeits-Identitätsadresse speichert, für eine Verwendung jener als seine Arbeits-Identitätsadresse in Kommunikationsverbindungen des Teilnehmerendgeräts.
(vi) über den Sender dem festen Prozessor eine Registrierungsaufforderung sendet, in der der aktuelle Teilnehmeridentitätscode in einer Arbeitsadresse des Teilnehmerendgeräts enthalten ist.
(vii) die erzeugte Arbeits-Identitätsadresse in Nachrichten verwendet, die über den Transceiver mit anderen Endgeräten des Systems ausgesendet wurden.

26. Teilnehmerendgerät nach Anspruch 25, das eine Mobilstation oder ein festes Teilnehmerendgerät umfasst.

27. Teilnehmerendgerät nach Anspruch 26, wobei das Teilnehmerendgerät ein festes Endgerät umfasst, das über Kabelverbindungen mit der Systeminfrastruktur verbunden ist.

28. Teilnehmerendgerät nach Anspruch 26 oder Anspruch 27, das so betreibbar ist, dass es Funkverbindungen durch einen gebündelten Betriebsmodus, TMO, und durch einen direkten Betriebsmodus, DMO, schafft, und dieselbe erzeugte Arbeits-Identitätsadresse sowohl im TMO als auch im DMO verwendet.

## Revendications

1. Procédé de fonctionnement d'un système de communications mobiles comprenant une pluralité de terminaux utilisateurs (19, 20) et une infrastructure système fixe (10), dans lequel un code d'identification, code ID, indiquant un utilisateur en cours d'un terminal utilisateur est stocké par le terminal utilisateur et est utilisé à des fins de signalisation par et/ou pour le terminal utilisateur, le procédé comprenant les étapes selon lesquelles :
(i) un terminal utilisateur (19) envoie (74) à un processeur fixe (16) de l'infrastructure système un signal incluant un code ID d'utilisateur (RUN) identifiant l'utilisateur en cours du terminal utilisateur ;
(ii) le processeur fixe valide le code ID d'utilisateur ;
(iii) le processeur fixe produit et envoie (78) au terminal utilisateur un signal d'instruction donnant au terminal utilisateur l'instruction de commencer une procédure de création d'adresse ID ;
(iv) le terminal utilisateur, en réponse à la réception du signal d'instruction, démarre une procédure de création d'adresse ID pour former une adresse ID de travail en cours incluant le code ID d'utilisateur ;
(v) le terminal utilisateur stocke l'adresse ID de travail en cours formée afin de l'utiliser en tant que son adresse ID de travail dans des communications effectuées par le terminal utilisateur.

2. Procédé selon la revendication 1, qui comprend, avant l'étape (i), l'étape selon laquelle l'utilisateur en cours du terminal utilisateur introduit dans le terminal un code ID d'utilisateur, qui identifie l'utilisateur en cours du terminal.

3. Procédé selon la revendication 1 ou la revendication 2, dans lequel le code ID d'utilisateur ne possède pas plus de sept chiffres.

4. Procédé selon l'une quelconque des revendications précédentes, dans lequel, pendant ou avant l'étape (i), le terminal utilisateur envoie un signal qui contient une demande d'enregistrement dans le système incluant des informations qui identifient le terminal utilisateur, et le processeur fixe valide l'utilisation du terminal dans le système en se référant à un registre du terminal utilisateur.

5. Procédé selon l'une quelconque des revendications précédentes, dans lequel le code ID d'utilisateur est connu par les autres utilisateurs du système et dans lequel le terminal utilisateur envoie au processeur fixe, en plus du code ID d'utilisateur, un numéro d'identification personnel (PIN) utilisé par l'utilisateur en cours, et le processeur fixe valide l'utilisation du terminal utilisateur par l'utilisateur en cours en se référant à une mémoire stockant les codes ID d'utilisateurs valables et un PIN en cours de chaque utilisateur.

6. Procédé selon l'une quelconque des revendications précédentes, dans lequel, après la validation par le processeur fixe, le processeur fixe envoie au terminal utilisateur un signal d'instruction donnant au terminal utilisateur l'instruction de commencer la procédure de création d'adresse ID en se réenregistrant dans le système.

7. Procédé selon la revendication 6, dans lequel, en réponse à la réception du signal d'instruction par le terminal utilisateur, le terminal utilisateur envoie (80) au processeur fixe un signal contenant une demande de réenregistrement.

8. Procédé selon la revendication 7, dans lequel le processeur fixe, en réponse à la réception de la demande de réenregistrement, envoie au terminal utilisateur un signal de réponse acceptant (82) la demande et indiquant une adresse ID d'utilisateur en cours à utiliser par le terminal utilisateur, l'adresse ID d'utilisateur en cours incluant le code ID d'utilisateur validé.

9. Procédé selon la revendication 8, et dans lequel, en réponse à la réception du signal de réponse envoyé par le processeur fixe, le terminal utilisateur stocke l'adresse ID de travail indiquée, incluant le code ID d'utilisateur, et utilise (84) l'adresse ID de travail indiquée dans des communications avec un autre terminal utilisateur fonctionnant dans le système.

10. Procédé selon l'une quelconque des revendications précédentes, dans lequel le système comprend une pluralité de terminaux utilisateurs et dans lequel un code ID indiquant un utilisateur en cours de chacun des terminaux utilisateurs est inclus dans une adresse ID indiquée par le processeur fixe, et stocké par le terminal utilisateur et utilisé à des fins de signalisation par et/ou pour ce terminal utilisateur.

11. Procédé selon l'une quelconque des revendications précédentes, et dans lequel le système est un système fonctionnant selon des procédures à la norme TETRA et l'adresse ID de travail en cours du ou de chaque terminal utilisateur est une adresse de Couche 2.

12. Procédé selon la revendication 11, et dans lequel le terminal utilisateur, en réponse à la réception du signal d'instruction envoyé par le processeur fixe, démarre une procédure de Connexion ITSI selon des procédures à la norme TETRA.

13. Procédé selon la revendication 12, et dans lequel le processeur fixe, quand il envoie un signal de réponse au terminal utilisateur après avoir reçu un signal de demande de Connexion ITSI en provenance du terminal utilisateur, indique l'acceptation du signal de demande et envoie au terminal utilisateur un signal de réponse indiquant que le code ID d'utilisateur défini dans le champ Identité Courte d'Abonné de type Alias (ASSI), disponible dans la signalisation TETRA de Couche 3, doit être utilisé dans l'adresse ID de travail en cours par le terminal utilisateur.

14. Procédé selon l'une quelconque des revendications précédentes, et qui comprend une procédure de suppression de l'adresse ID de travail du terminal utilisateur pendant l'utilisation du terminal par les extrémités utilisateur en cours.

15. Procédé selon la revendication 14, et dans lequel la procédure de suppression de l'adresse ID de travail comprend une procédure de déconnexion démarrée par l'utilisateur, qui résulte en ce que le terminal utilisateur envoie un signal de déconnexion à un processeur fixe de l'infrastructure système et en ce que le processeur fixe renvoie un signal d'instruction de suppression faisant en sorte que le terminal utilisateur arrête d'utiliser l'adresse ID de travail.

16. Procédé selon la revendication 15, et dans lequel, quand le terminal utilisateur reçoit le signal d'instruction de suppression, il efface l'adresse ID de travail des adresses ID d'utilisateurs en cours qu'il stocke dans sa mémoire.

17. Procédé selon l'une quelconque des revendications précédentes, et dans lequel le système comprend une pluralité de terminaux utilisateurs comprenant une ou plusieurs stations mobiles utilisables pour effectuer des communications sans fil, chacun des terminaux utilisateurs comprenant un émetteur RF et un récepteur RF, facultativement combinés en un émetteur-récepteur, et dans lequel l'infrastructure système comprend au moins un émetteur RF et au moins un récepteur RF, facultativement combinés en un émetteur-récepteur, faisant partie intégrante d'au moins une BTS (station émettrice-réceptrice de base) pour l'envoi de communications sous une forme RF entre l'infrastructure système et les terminaux utilisateurs.

18. Procédé selon l'une quelconque des revendications précédentes, et dans lequel les informations envoyées entre chaque terminal utilisateur et le processeur fixe de l'infrastructure pour l'établissement de l'adresse ID donnée le sont par un transfert de données de type Service de Messages Courts (SDS).

19. Procédé selon l'une quelconque des revendications précédentes, et dans lequel, quand l'adresse ID de travail d'un terminal utilisateur en cours d'utilisation par un utilisateur cible est incluse dans un signal de démarrage de communication envoyé par un autre terminal utilisateur de l'infrastructure système, l'infrastructure système, quand elle reçoit le signal de démarrage de communication, fonctionne de façon à reconnaître l'adresse ID de travail de l'utilisateur cible et à diriger la communication demandée vers le terminal utilisateur qui a cette adresse ID de travail.

20. Procédé selon la revendication 19, et dans lequel les communications sont envoyées tandis qu'une station émettrice-réceptrice de base de l'infrastructure système à travers laquelle les communications sont envoyées depuis un ou plusieurs des terminaux utilisateurs est dans un mode de fonctionnement en repli.

21. Procédé selon l'une quelconque des revendications précédentes, et dans lequel les terminaux utilisateurs communiquent entre eux dans un mode de fonctionnement direct, DMO, à l'aide des adresses ID de travail des terminaux établies par les terminaux conjointement avec le processeur fixe.

22. Installation d'infrastructure système comprenant une station émettrice-réceptrice de base (14), un processeur fixe (16) couplé de manière fonctionnelle à la station émettrice-réceptrice de base (14), et une mémoire associée au processeur fixe, le processeur fixe fonctionnant de façon à :
(i) recevoir (74) d'un terminal utilisateur (19), par l'intermédiaire de la station émettrice-réceptrice de base, un signal incluant un code ID d'utilisateur identifiant l'utilisateur en cours du terminal utilisateur ;
(ii) valider (76) le code ID d'utilisateur ;
(iii) produire et envoyer (78) au terminal utilisateur, par l'intermédiaire de la station émettrice-réceptrice de base, un signal d'instruction donnant au terminal utilisateur l'instruction de commencer une procédure de création d'adresse ID ;
(iv) enregistrer dans la mémoire une adresse ID du terminal utilisateur, telle que reliée au code ID d'utilisateur validé ;
(v) recevoir (80) du terminal utilisateur, par l'intermédiaire de la station émettrice-réceptrice de base, en réponse à la réception du signal d'instruction envoyé par le processeur fixe, une demande d'enregistrement dans laquelle le terminal utilisateur a inclus le code ID d'utilisateur dans une adresse de travail du terminal utilisateur ; et
(vi) accepter (82) l'enregistrement du terminal utilisateur en réponse à la demande d'enregistrement.

23. Installation d'infrastructure système selon la revendication 22, comprenant un premier registre couplé de manière fonctionnelle au processeur fixe pour enregistrer des informations concernant les terminaux utilisateurs à l'intérieur du système, et un deuxième registre couplé de manière fonctionnelle au processeur fixe pour enregistrer des informations concernant les utilisateurs des terminaux à l'intérieur du système.

24. Installation d'infrastructure système selon la revendication 23, et qui, quand elle reçoit un signal de démarrage de communication en provenance d'un terminal utilisateur, fonctionne de façon à reconnaître l'adresse ID de travail d'un terminal utilisateur cible et à diriger la communication demandée vers le terminal utilisateur cible qui a cette adresse ID de travail.

25. Terminal utilisateur qui peut être utilisé dans un système de communications mobiles incluant une infrastructure système, le terminal utilisateur contenant une interface utilisateur (32), un émetteur RF (62, 64, 42), un récepteur RF (42, 46) et une mémoire (34), et fonctionnant de façon à:
(i) recevoir, par l'intermédiaire de son interface utilisateur, un code ID d'utilisateur en cours identifiant un utilisateur en cours ;
(ii) envoyer, par l'intermédiaire de son émetteur, à un processeur fixe (16) de l'infrastructure système, un signal incluant le code ID d'utilisateur en cours ;
(iii) recevoir, par l'intermédiaire de son récepteur, en provenance du processeur fixe, un signal d'instructions donnant au terminal utilisateur l'instruction de commencer une procédure de création d'adresse ID ;
(iv) en réponse à la réception du signal d'instruction, commencer une procédure de création d'adresse ID pour former une adresse ID de travail en cours incluant le code ID d'utilisateur en cours ;
(v) stocker dans la mémoire l'adresse ID de travail en cours formée afin de l'utiliser en tant que son adresse ID de travail lors de communications effectuées par le terminal utilisateur ;
(vi) envoyer au processeur fixe, par l'intermédiaire de l'émetteur, une demande d'enregistrement dans laquelle le code ID d'utilisateur en cours est inclus dans une adresse de travail du terminal utilisateur ;
(vii) utiliser l'adresse ID de travail formée dans des communications avec d'autres terminaux du système, envoyées par l'intermédiaire de l'émetteur-récepteur.

26. Terminal utilisateur selon la revendication 25, et qui comprend une station mobile ou un terminal fixe.

27. Terminal utilisateur selon la revendication 26, et dans lequel le terminal utilisateur comprend un terminal fixe qui est connecté par une connexion filaire à l'infrastructure système.

28. Terminal utilisateur selon la revendication 26 ou la revendication 27, et qui fonctionne de façon à réaliser des communications sans fil dans un mode de fonctionnement à ressources partagées, TMO, et dans un mode de fonctionnement direct, DMO, et à utiliser la même adresse ID de travail formée dans les deux modes TMO et DMO.
